# EUROPEAN PATENT SPECIFICATION

(11) **EP 1 912 898 B1**
(45) Date of publication and mention of the grant of the patent: **24.02.2010**
(21) Application number: 06744135.2
(22) Date of filing: 08.06.2006
(51) Int. Cl.: C01G 25/00

(54) **METHOD FOR CONCENTRATING NANOSUSPENSIONS**
VERFAHREN ZUM AUFKONZENTRIEREN VON NANOSUSPENSIONEN
PROCEDE DE CONCENTRATION DE NANOSUSPENSIONS

(30) Priority: 22.06.2005 GB 0512666
(43) Date of publication of application: 23.04.2008
(73) Proprietor: LOUGHBOROUGH UNIVERSITY ENTERPRISES LIMITED, Loughborough, Leicestershire LE11 3TU (GB)
(72) Inventor: BINNER, Jonathan G.P. c/o Loughborough University, Loughborough Leicestershire LE11 3TU (GB); Santacruz, Maria I.. c/o Loughborough University, Loughborough Leicestershire LE11 3TU (GB); Annapoorani, Ketharam. c/o Loughborough University, Loughborough Leicestershire LE11 3TU (GB)
(74) Representative: Thould, Lee Matthew
(86) International application number: PCT/GB2006/002081
(87) International publication number: WO 2006/136780

(56) References cited:
- WO-A-98/00577
- WO-A-03/103816
- DE-A1- 19 614 136
- J. DAVIES, J.G.P. BINNER: "The Role of Ammonium Polyacrylate in dispersing concentrated Alumina Suspensions" J. EUROP. CERAM. SOC, vol. 20, 2000, pages 1539-1553, XP002427299

## Description

The present invention relates to a method for concentrating nanosuspensions, and particularly but not exclusively to a method for concentrating zirconia nanosuspensions.

Nanopowders have a tendency to agglomerate during processing resulting in nanocomponents which may have undesirable material properties.

Wet forming techniques using nanosuspensions, in which nanopowder particles are suspended in a liquid, can be used to alleviate this problem. However, when the nanopowder particles in the suspension approach within approximately 2 nm of each other, the interactions are such that the force required to move them past each other increases significantly, i.e. there is a significant increase in the viscosity of the suspension.

For a given solids content, the finer the nanopowder particles, the closer they will approach each other. Thus, as particle size decreases, higher viscosities are experienced. Consequently, in order to provide nanosuspensions comprising fine nanopowder particles with an acceptably low viscosity to enable subsequent processing of the nanosuspension to form nanocomponents, it is conventionally necessary to provide a low solids content.

D1 (J.Davies, J.G.P. Binner, J. Europ. Ceram. Soc. 2000, 20, 1539-1553) discloses a process for making dispersions of colloidal powders by mixing an aqueous solution of ammonium polyacrylate, adding alumina powder, adjusting the pH and subjecting the suspension to an ultrasonic treatment.

According to a first aspect of the present invention, there is provided a method as claimed in claim 1.

Prior to step (i), the method may comprise modifying the acidity of the nanosuspension.

The step of modifying the acidity of the nanosuspension may comprise increasing the pH of the nanosuspension above the isoelectric point of the nanopowder particles, and may comprise decreasing the acidity of the nanosuspension. The step of modifying the acidity of the nanosuspension may alternatively comprise decreasing the pH of the nanosuspension to below the isoelectric point of the nanopowder particles, and may comprise increasing the acidity of the nanosuspension.

When the nanosuspension comprises an acidic solution, the step of modifying the acidity of the nanosuspension may comprise increasing the pH of the nanosuspension, for example to provide a basic solution. The nanosuspension may have a pH of between approximately 1.5 and approximately 6.5 prior to the step of modifying the acidity of the nanosuspension, and may have a pH of approximately 2.4 prior to the step of modifying the acidity of the nanosuspension.

The step of modifying the acidity of the nanosuspension may comprise increasing the pH of the nanosuspension to between approximately 9.0 and approximately 12.5. The step of modifying the acidity of the nanosuspension may comprise increasing the pH of the nanosuspension to approximately 11.5.

The step of modifying the acidity of the nanosuspension may comprise decreasing the acidity of the nanosuspension, for example by introducing an alkali into the nanosuspension. The alkali may comprise a dry alkali substance, and may comprise a dry alkali powder. The dry alkali substance may comprise tetramethyl ammonium hydroxide. Alternatively, the alkali may comprise an alkali solution. The alkali solution may comprise ammonium hydroxide solution.

Step (i) may generate electrosteric dispersion, or alternatively steric dispersion, or alternatively electrostatic dispersion.

The surfactant may be an anionic surfactant, and may comprise ammonium polyacrylate, for example CIBA® DISPEX® A40. The surfactant may alternatively be a cationic surfactant.

The step of reducing the liquid content of the nanosuspension may comprise heating the nanosuspension to evaporate a proportion of the liquid, and may comprise maintaining the nanosuspension at the heated temperature to evaporate a proportion of the liquid.

The step of heating the nanosuspension may be carried out by using a heated water bath or alternatively by using a microwave heating arrangement.

The heating step may comprise heating the nanosuspension to a temperature up to approximately 80°C, The heating step may comprise heating the nanosuspension to a temperature between approximately 45°C and approximately 60°C. The heating step may be carried out by heating the nanosuspension to a temperature less than 45°C at a pressure less than ambient.

Alternatively or additionally, the step of reducing the liquid content of the nanosuspension may comprise passing the nanosuspension through filtration means. The step of passing the nanosuspension through the filtration means may comprise forcing the nanosuspension through the filtration means, for example by the application of pressure. The step of passing the nanosuspension through the filtration means may comprise passing the nanosuspension through a filter press arrangement.

The step of controlling the dispersion of the nanopowder particles in the liquid may alternatively or additionally comprise agitating the nanosuspension during the step of reducing the liquid content of the nanosuspension and/or after the step of reducing the liquid content of the nanosuspension. Where the nanosuspension is agitated during the step of reducing the liquid content of the nanosuspension, the heating step may be temporarily suspended during agitation, and may subsequently be resumed.

The step of agitating the nanosuspension may comprise subjecting the nanosuspension to ultrasound to vibrate the nanosuspension.

The nanosuspension may be subjected to ultrasound at discrete intervals having a predetermined duration. The method may comprise increasing the predetermined duration of the discrete intervals, for example as the liquid content of the nanosuspension decreases. The method may comprise decreasing the duration between the discrete intervals to thereby increase the frequency of the discrete intervals, for example as the liquid content of the nanosuspension decreases.

The method may comprise increasing the vibration frequency and/or power of the ultrasound preferably as the liquid content of the nanosuspension decreases.

The nanopowder particles may comprise zirconia nanopowder particles, and may comprise yttria-doped zirconia nanopowder particles. The liquid may be a water-based liquid.

The unconcentrated nanosuspension may comprise less than 30 wt% nanopowder particles, and may have a viscosity of less than 0.1 Pa-s at a shear rate of 100 s⁻¹.

The method may provide a concentrated nanosuspension comprising between the weight percentage content of nanopowder particles of the unconcentrated suspension and approximately 80 wt% nanopowder particles, and the nanosuspension may have a viscosity of less than 2 Pa-s at a shear rate of 100 s⁻¹.

The nanosuspension may comprise between approximately 50 wt% and approximately 80 wt% nanopowder particles.

The method may provide a concentrated nanosuspension having a viscosity of less than 1 Pa-s at a shear rate of 100 s⁻¹, and may provide a concentrated nanosuspension having a viscosity of approximately 0.5 Pa-s at a shear rate of 100 s⁻¹.

The method may provide a concentrated nanosuspension comprising between approximately 50 wt% and approximately 80 wt% nanopowder particles, The method may provide a concentrated nanosuspension comprising approximately 56 wt% nanopowder particles or comprising approximately 70 wt% nanopowder particles.

Embodiments of the present invention will now be described for the purposes of illustration only.

The invention provides generally a method for concentrating nanosuspensions comprising nanopowder particles suspended in a liquid, for example a water-based liquid. Whilst not limited to any particular nanosuspension, in one embodiment the method is used for concentrating zirconia nanosuspensions in which zirconia nanopowder particles are suspended in a liquid.

Depending upon the desired material properties of the nanocomponents to be produced using the zirconia nanosuspension, the nanosuspension may comprise pure zirconia nanopowder particles, or may alternatively comprise yttria-doped nanopowder particles. For example, zirconia nanosuspensions comprising 1.5, 2.7, 3, 5, 8 or 10 mol% yttria, available from MEL Chemicals, could be concentrated using the method according to the invention.

In general, the method is used to concentrate nanosuspensions having a low solids content, for example less than 30 wt% nanopowder particles, and having an initial viscosity, prior to concentration, of less than 0.1 Pa-s at a shear rate of 100 s⁻¹.

The approximate average diameter of the nanopowder particles in typical nanosuspensions which can be concentrated using the method is in the order of 20 nm.

The nanosuspension is concentrated using the method according to the invention by reducing the liquid content of the nanosuspension and controlling the dispersion of the nanopowder particles in the liquid.

As a first step, and depending upon the acidity of the unconcentrated nanosuspension, the step of controlling the dispersion of the nanopowder particles in the liquid may comprise initially modifying the acidity of the nanosuspension to a desired pH level. In particular, when the nanosuspension is an acidic solution, the pH of the nanosuspension is increased above the isoelectric point of the nanopowder particles to provide a basic solution. In a preferred embodiment, the unconcentrated nanosuspension has a pH of approximately 2.4, and the step of modifying the acidity comprises increasing the pH to approximately 11.5.

The pH of the nanosuspension is increased by introducing an alkali into the nanosuspension and, in order to avoid diluting the nanosuspension and reducing its concentration, the use of a dry alkali substance is advantageous. In particular, a dry alkali powder such as tetramethyl ammonium hydroxide may be added to the unconcentrated nanosuspension to increase the pH.

In an alternative embodiment, an alkali solution, such as ammonium hydroxide solution, may be added to the nanosuspension to increase the pH. However, the use of a solution has the disadvantage of increasing the liquid content of the nanosuspension, thereby diluting the nanosuspension.

Once the acidity of the nanosuspension has been modified to provide a basic solution, the step of controlling the dispersion of the nanopowder particles in the liquid comprises generating electrosteric dispersion of the nanopowder particles in the liquid. In a preferred embodiment of the invention, electrosteric dispersion is generated by introducing a surfactant into the nanosuspension.

When the nanosuspension is a basic solution, for example having a pH of approximately 11.5, an anionic surfactant is introduced into the nanosuspension to generate electrosteric dispersion. It has been found that an anionic surfactant such as ammonium polyacrylate, for example CIBA® DISPEX® A40 produced by Ciba Speciality Chemicals, is suitable for generating the required electrosteric dispersion.

After the dispersion of the nanopowder particles in the liquid has been controlled using the above steps, the liquid content of the nanosuspension is reduced to concentrate the nanosuspension.

In one embodiment of the invention, the liquid content is reduced by heating the nanosuspension to evaporate a proportion of the liquid, thereby resulting in an increase in the weight percentage content of nanopowder in the nanosuspension. It has been found that heating the nanosuspension to a temperature between approximately 45°C and approximately 60°C, and maintaining it at that temperature for a period of approximately three days, provides a controlled evaporation of the liquid and results in an acceptable solids content. However, the nanosuspension may be heated to any temperature up to approximately 80°C, and may be maintained at that temperature for any suitable period of time.

As an alternative to, or in addition to, the above, the liquid content may be reduced by forcing the nanosuspension through a filtration means, for example by using a suitable filter press arrangement. Any suitable filtration means in which the nanosuspension is forced through an ultrafine filtration membrane could be used for this purpose.

The step of controlling the dispersion of the nanopowder particles in the liquid may further or alternatively comprise agitating the nanosuspension during and/or after the step of reducing the liquid content of the nanosuspension by heating and/or filtration. This enables the viscosity of the nanosuspension to be maintained at an acceptable level, as the liquid content decreases, by maintaining the separation of the nanopowder particles.

The nanosuspension is agitated by subjecting it to ultrasound to thereby vibrate the nanosuspension. In order to reduce the temperature of the nanosuspension whilst ultrasound is being applied, and thereby minimise evaporation of the liquid from the nanosuspension, it is advantageous to cool the nanosuspension in a cold water bath whilst it is being subjected to ultrasound.

In an alternative embodiment of the invention, the nanosuspension is subjected to ultrasound at discrete intervals during the heating and/or filtration step. These discrete intervals are of a predetermined duration and may be applied at times predetermined according to the solids content or the viscosity of the nanosuspension. For example, in the former case, the nanosuspension could be subjected to ultrasound when it comprises 38, 48, 54 and 56 wt% nanopowder particles. In the latter case, it could be subjected to ultrasound when the viscosity is greater than or equal to 1 Pa-s at a shear rate of 100 s⁻¹.

As the liquid content of the nanosuspension decreases, and hence the viscosity of the nanosuspension increases, it may be desirable to subject the nanosuspension to ultrasound for periods of increasing duration, and/or to decrease the duration between the discrete intervals at which ultrasound is applied thereby increasing the frequency of the intervals. By way of example only, the initial duration of the discrete intervals during which the nanosuspension is subjected to ultrasound may be in the order of two minutes.

In a further embodiment, the nanosuspension could be subjected to ultrasound continuously throughout the heating and/or filtration step to maintain the viscosity of the nanosuspension at an acceptable level.

The nanosuspension may be subjected to ultrasound having a suitable power, frequency and amplitude. Ultrasound having a power of 75 W, vibration frequencies of 20 and 24 kHz, and an amplitude of 14 µm has been found to be suitable. It is also possible that the power and/or frequency and/or amplitude of the ultrasound could be increased as the solids content, and hence viscosity, of the nanosuspension increases.

Using the method described above, it is possible to produce nanosuspensions having high solids content and low viscosity. In particular, the method may be used to provide a concentrated nanosuspension comprising between the weight percentage content of nanopowder particles of the unconcentrated suspension and 80 wt% nanopowder particles, the nanosuspension having a viscosity of less than 2 Pa-s at a shear rate of 100 s⁻¹.

The applicant has appreciated that in some circumstances, if the solids content of the nanosuspension is too high, it can become unstable and can be prone to a sudden increase in viscosity if left standing for any period of time. Concentrated nanosuspension comprising approximately 56 wt% nanopowder particles having a viscosity of approximately 0.5 Pa-s at a shear rate of 100 s⁻¹ have been produced using the method described above and have been found to be stable.

There is thus provided a method for concentrating a nanosuspension which is capable of producing a nanosuspension having a high solids content and a low viscosity.

Providing a concentrated nanosuspension having a high solids content, and thus low liquid content, and having a relatively low viscosity is advantageous since the concentrated nanosuspension can be more easily processed to produce nanocomponents having desirable material properties.
Furthermore, the cost of transporting such concentrated nanosuspensions is less than the cost of transporting conventional nanosuspensions which, in order to achieve an acceptable viscosity, comprise a significant amount of liquid.

The step of controlling the dispersion of the nanopowder particles in the liquid by generating electrosteric dispersion has been found to be advantageous since it ensures that the nanopowder particles are adequately dispersed in the liquid before the amount of liquid is reduced during the heating and/or filtration step.

If the unconcentrated nanosuspension is an acidic solution and an anionic surfactant is to be used to generate electrosteric dispersion, it is particularly important that the pH of the nanosuspension is increased to provide a basic solution prior to addition of the surfactant since otherwise the desired electrosteric dispersion may not be generated.

The step of controlling the dispersion of the nanopowder particles in the liquid to maintain the dispersion of the nanopowder particles by subjecting the nanosuspension to ultrasound during and/or after the heating and/or filtration step is also advantageous since it enables the viscosity of the nanosuspension to be carefully controlled and maintained at an acceptable level.

Although embodiments of the invention have been described in the preceding paragraphs with reference to various examples, it should be appreciated that various modifications to the examples given may be made without departing from the scope of the present invention, as claimed.

For example, if the unconcentrated nanosuspension is a basic solution, it is not necessary to modify the acidity of the nanosuspension prior to adding an anionic surfactant.

It is also possible that electrosteric dispersion could be generated in an acidic solution by introducing a cationic surfactant into the nanosuspension. In this case, it would not be necessary to modify the acidity of the nanosuspension prior to introducing the cationic surfactant.

The step of generating dispersion of the nanopowder particles in the liquid may comprise generating steric dispersion or electrostatic dispersion instead of electrosteric dispersion.

Whilst endeavouring in the foregoing specification to draw attention to those features of the invention believed to be of particular importance, it should be understood that the Applicant claims protection in respect of any patentable feature or combination of features hereinbefore referred to and/or shown in the drawings, whether or not particular emphasis has been placed thereon.

## Claims

1. A method for concentrating a nanosuspension comprising nanopowder particles suspended in a liquid, the method comprising the steps of:
(i) introducing a surfactant into the unconcentrated nanosuspension to increase dispersion of the nanopowder particles in the liquid and thereby create a dispersed unconcentrated nanosuspension;
(ii) reducing the liquid content of the dispersed unconcentrated nanosuspension to increase the concentration of the nanosuspension; and
(iii) subjecting the nanosuspension to ultrasonic agitation at a plurality of discrete intervals during step (ii) to control the dispersion of the nanopowder particles in the liquid.

2. A method according to claim 1, wherein the method comprises modifying the acidity of the nanosuspension prior to introducing the surfactant in step (i).

3. A method according to claim 2, wherein the step of modifying the acidity of the nanosuspension comprises increasing the pH of the nanosuspension above the isoelectric point of the nanopowder particles.

4. A method according to claim 2 or claim 3, wherein, when the nanosuspension comprises an acidic solution, the step of modifying the acidity of the nanosuspension comprises increasing the pH of the nanosuspension to provide a basic solution.

5. A method according to any of claims 2 to 4, wherein the nanosuspension has a pH of between approximately 1.5 and approximately 6.5 prior to the step of modifying the acidity of the nanosuspension.

6. A method according to claim 5, wherein the nanosuspension has a pH of approximately 2.4 prior to the step of modifying the acidity of the nanosuspension.

7. A method according to any of claims 2 to 6, wherein the step of modifying the acidity of the nanosuspension comprises increasing the pH of the nanosuspension to between approximately 9.0 and approximately 12.5.

8. A method according to claim 7, wherein the step of modifying the acidity of the nanosuspension comprises increasing the pH of the nanosuspension to approximately 11.5.

9. A method according to any of claims 2 to 8, wherein the step of modifying the acidity of the nanosuspension comprises introducing an alkali into the nanosuspension to decrease the acidity thereof.

10. A method according to claim 9, wherein the alkali comprises a dry alkali substance.

11. A method according to claim 10, wherein the dry alkali substance comprises a dry alkali powder.

12. A method according to claim 10 or claim 11, wherein the dry alkali substance comprises tetramethyl ammonium hydroxide.

13. A method according to claim 9, wherein the alkali comprises an alkali solution.

14. A method according to claim 13, wherein the alkali solution comprises ammonium hydroxide solution.

15. A method according to any of the preceding claims, wherein step (i) generates electrosteric dispersion of the nanopowder particles in the liquid.

16. A method according to any of the preceding claims, wherein the surfactant is an anionic surfactant.

17. A method according to any of the preceding claims, wherein the surfactant comprises ammonium polyacrylate.

18. A method according to any of the preceding claims, wherein step (ii) comprises heating the nanosuspension to evaporate a proportion of the liquid.

19. A method according to claim 18, wherein the heating step comprises heating the nanosuspension to a temperature up to approximately 80°C.

20. A method according to claim 19, wherein the heating step comprises heating the nanosuspension to a temperature between approximately 45°C and approximately 60°C.

21. A method according to any of claims 18 to 20, wherein the nanosuspension is maintained at the heated temperature to evaporate a proportion of the liquid.

22. A method according to any of the preceding claims, wherein step (ii) comprises passing the nanosuspension through filtration means.

23. A method according to any of the preceding claims, wherein the method further comprises subjecting the nanosuspension to ultrasonic agitation after step (ii).

24. A method according to any of the preceding claims, wherein the discrete intervals have a predetermined duration.

25. A method according to claim 24, wherein step (iii) comprises increasing the predetermined duration of the discrete intervals as the liquid content of the nanosuspension decreases during step (ii).

26. A method according to claim 24 or claim 25, wherein step (iii) comprises decreasing the duration between the discrete intervals to increase the frequency of the intervals as the liquid content of the nanosuspension decreases during step (ii).

27. A method according to any of the preceding claims, wherein the method comprises increasing the vibration frequency and/or power of the ultrasound as the liquid content of the nanosuspension decreases.

28. A method according to any of the preceding claims, wherein the nanopowder particles comprise zirconia nanopowder particles.

29. A method according to claim 28, wherein the nanopowder particles comprise yttria-doped zirconia nanopowder particles.

30. A method according to any of the preceding claims, wherein the liquid is a water-based liquid.

31. A method according to any of the preceding claims, wherein the unconcentrated nanosuspension comprises less than 30 wt% nanopowder particles, and has a viscosity of less than 0.1 Pa-s at a shear rate of 100 s⁻¹.

32. A method according to claim 31, wherein the method provides a concentrated nanosuspension comprising between the weight percentage content of nanopowder particles of the unconcentrated suspension and approximately 80 wt% nanopowder particles, the concentrated nanosuspension having a viscosity of less than 2 Pa-s at a shear rate of 100 s⁻¹.

33. A method according to claim 32, wherein the method provides a concentrated nanosuspension comprising between approximately 50 wt% and approximately 80 wt% nanopowder particles.

34. A method according to claim 32 or claim 33, wherein the method provides a concentrated nanosuspension having a viscosity of less than 1 Pa-s at a shear rate of 100 s⁻¹.

35. A method according to claim 34, wherein the method provides a concentrated nanosuspension having a viscosity of approximately 0.5 Pa-s at a shear rate of 100 s⁻¹.

## Patentansprüche

1. Verfahren zum Konzentrieren einer Nanosuspension, die in einer Flüssigkeit suspendierte Nanopartikel aufweist, wobei das Verfahren die folgenden Schritte aufweist:
(i) Einleiten einer oberflächenaktiven Substanz in die unkonzentrierte Nanosuspension, um die Dispersion der Nanopulver-Partikel in der Flüssigkeit zu erhöhen und **dadurch** eine dispergierte unkonzentrierte Nanosuspension zu erzeugen;
(ii) Verringern des Flüssigkeitsgehalts der dispergierten unkonzentrierten Nanosuspension, um die Konzentration der Nanosuspension zu erhöhen;
(iii) Einwirkenlassen von Ultraschall-Bewegungen auf die Nanosuspension bei einer Vielzahl diskreter Intervalle während Schritt (ii), um die Dispersion der Nanopulver-Partikel in der Flüssigkeit zu steuern.

2. Verfahren nach Anspruch 1, bei welchem das Verfahren vor dem Einleiten der oberflächenaktiven Substanz einen Schritt zum Ändern der Acidität der Nanosuspension aufweist.

3. Verfahren nach Anspruch 2, bei welchem der Schritt des Änderns der Acidität der Nanosuspension ein Erhöhen des pH-Wertes der Nanosuspension über den isoelektrischen Punkt der Nanopulver-Partikel aufweist.

4. Verfahren nach Anspruch 2 oder 3, bei welchem, falls die Nanosuspension eine saure Lösung aufweist, der Schritt des Änderns der Acidität der Nanosuspension ein Erhöhen des pH-Wertes der Nanosuspension aufweist, um eine basische Lösung zu bilden.

5. Verfahren nach einem der Ansprüche 2 bis 4, bei welchem die Nanosuspension vor dem Schritt des Änderns der Acidität der Nanosuspension einen pH-Wert zwischen etwa 1,5 und etwa 6,5 hat.

6. Verfahren nach Anspruch 5, bei welchem die Nanosuspension vor dem Schritt des Änderns der Acidität der Nanosuspension einen pH-Wert von etwa 2,4 hat.

7. Verfahren nach einem der Ansprüche 2 bis 6, bei welchem der Schritt des Änderns der Acidität der Nanosuspension ein Erhöhen des pH-Wertes der Nanosuspension auf etwa 9,0 bis etwa 12,5 aufweist.

8. Verfahren nach Anspruch 7, bei welchem der Schritt des Änderns der Acidität der Nanosuspension ein Erhöhen des pH-Wertes der Nanosuspension auf etwa 11,5 aufweist.

9. Verfahren nach einem der Ansprüche 2 bis 8, bei welchem der Schritt des Änderns der Acidität der Nanosuspension ein Einleiten von Alkali in die Nanosuspension aufweist, um deren Acidität zu verringern.

10. Verfahren nach Anspruch 9, bei welchem das Alkali eine Alkali-Trockensubstanz aufweist.

11. Verfahren nach Anspruch 10, bei welchem die Alkali-Trockensubstanz ein trockenes Alkalipulver aufweist.

12. Verfahren nach Anspruch 10 oder 11, bei welchem die Alkali-Trockensubstanz Tetramethyl-Ammoniumhydroxid aufweist.

13. Verfahren nach Anspruch 9, bei welchem das Alkali eine alkalische Lösung aufweist.

14. Verfahren nach Anspruch 13, bei welchem die alkalische Lösung Ammoniumhydroxid-Lösung aufweist.

15. Verfahren nach einem der vorhergehenden Ansprüche, bei welchem Schritt (i) eine elektrosterische Dispersion der Nanopulver-Partikel in der Flüssigkeit erzeugt.

16. Verfahren nach einem der vorhergehenden Ansprüche, bei welchem die oberflächenaktive Substanz eine anionische oberflächenaktive Substanz ist.

17. Verfahren nach einem der vorhergehenden Ansprüche, bei welchem die oberflächenaktive Substanz Ammonium-Polyacrylat aufweist.

18. Verfahren nach einem der vorhergehenden Ansprüche, bei welchem Schritt (ii) ein Aufheizen der Nanosuspension aufweist, um einen Teil der Flüssigkeit zu verdampfen.

19. Verfahren nach Anspruch 18, bei welchem der Schritt des Aufheizens ein Aufheizen der Nanosuspension auf eine Temperatur von bis zu etwa 80°C aufweist.

20. Verfahren nach Anspruch 19, bei welchem der Schritt des Aufheizens ein Aufheizen der Nanosuspension auf eine Temperatur von etwa 45°C bis etwa 60°C aufweist.

21. Verfahren nach einem der Ansprüche 18 bis 20, bei welchem die Nanosuspension auf der aufgeheizten Temperatur gehalten wird, um einen Teil der Flüssigkeit zu verdampfen.

22. Verfahren nach einem der vorhergehenden Ansprüche, bei welchem Schritt (ii) ein Hindurchleiten der Nanosuspension durch Filtermittel aufweist.

23. Verfahren nach einem der vorhergehenden Ansprüche, wobei das Verfahren außerdem nach Schritt (ii) das Einwirkenlassen von Ultraschall-Bewegungen auf die Nanosuspension aufweist.

24. Verfahren nach einem der vorhergehenden Ansprüche, bei welchem die diskreten Intervalle eine vorbestimmte Dauer haben.

25. Verfahren nach Anspruch 24, bei welchem Schritt (iii) ein Erhöhen der vorbestimmten Dauer der diskreten Intervalle aufweist, wenn sich der Flüssigkeitsgehalt der Nanosuspension während Schritt (ii) verringert.

26. Verfahren nach Anspruch 24 oder 25, bei welchem Schritt (iii) ein Verringern der Dauer zwischen den diskreten Intervallen aufweist, um die Frequenz der Intervalle zu erhöhen, wenn sich der Flüssigkeitsgehalt der Nanosuspension während Schritt (ii) verringert.

27. Verfahren nach einem der vorhergehenden Ansprüche, bei welchem das Verfahren ein Erhöhen der Frequenz und/oder Leistung des Ultraschalls aufweist, wenn sich der Flüssigkeitsgehalt der Nanosuspension verringert.

28. Verfahren nach einem der vorhergehenden Ansprüche, bei welchem die Nanopulver-Partikel Zirkonoxid-Nanopulverpartikel aufweisen.

29. Verfahren nach Anspruch 28, bei welchem die Nanopulver-Partikel mit Yttriumoxid dotierte Zirkonoxid-Nanopulverpartikel aufweisen.

30. Verfahren nach einem der vorhergehenden Ansprüche, bei welchem die Flüssigkeit eine Flüssigkeit auf Wasserbasis ist.

31. Verfahren nach einem der vorhergehenden Ansprüche, bei welchem die unkonzentrierte Nanosuspension weniger als 30 Gew.% Nanopulver-Partikel aufweist und eine Viskosität von weniger als 0,1 Pa*s bei einer Schergeschwindigkeit von 100 s⁻¹ hat.

32. Verfahren nach Anspruch 31, wobei das Verfahren eine konzentrierte Nanosuspension erzeugt, die zwischen dem Gewichtsprozent-Gehalt der Nanopulver-Partikel der unkonzentrierten Suspension und etwa 80 Gew.% Nanopulver-Partikel aufweist, und wobei die konzentrierte Nanosuspension eine Viskosität von weniger als 2 Pa*s bei einer Schergeschwindigkeit von 100 s⁻¹ hat.

33. Verfahren nach Anspruch 32, wobei das Verfahren eine konzentrierte Nanosuspension erzeugt, die zwischen etwa 50 Gew.% und etwa 80 Gew.% Nanopulver-Partikel aufweist.

34. Verfahren nach Anspruch 32 oder 33, wobei das Verfahren eine konzentrierte Nanosuspension erzeugt, die eine Viskosität von weniger als 1 Pa*s bei einer Schergeschwindigkeit von 100 s⁻¹ hat.

35. Verfahren nach Anspruch 34, wobei das Verfahren eine konzentrierte Nanosuspension erzeugt, die eine Viskosität von etwa 0,5 Pa*s bei einer Schergeschwindigkeit von 100 s⁻¹ hat.

## Revendications

1. Procédé de concentration d'une nanosuspension comprenant des particules de nanopoudre en suspension dans un liquide, le procédé comprenant les étapes consistant à :
(i) introduire un tensioactif dans la nanosuspension non concentrée pour augmenter la dispersion des particules de nanopoudre dans le liquide et créer ainsi une nanosuspension dispersée non concentrée ;
(ii) réduire la teneur en liquide de la nanosuspension dispersée non concentrée pour augmenter la concentration de la nanosuspension ; et
(iii) soumettre la nanosuspension à une agitation par ultrasons à une pluralité d'intervalles discrets durant l'étape (ii) pour contrôler la dispersion des particules de nanopoudre dans le liquide.

2. Procédé selon la revendication 1, lequel procédé consiste à modifier l'acidité de la nanosuspension avant d'introduire le tensioactif dans l'étape (i).

3. Procédé selon la revendication 2, dans lequel l'étape de modification de l'acidité de la nanosuspension consiste à augmenter le pH de la nanosuspension au-dessus du point isoélectrique des particules de nanopoudre.

4. Procédé selon la revendication 2 ou la revendication 3, dans lequel, quand la nanosuspension comprend une solution acide, l'étape de modification de l'acidité de la nanosuspension consiste à augmenter le pH de la nanosuspension pour fournir une solution basique.

5. Procédé selon l'une quelconque des revendications 2 à 4, dans lequel la nanosuspension présente un pH compris entre approximativement 1,5 et approximativement 6,5 avant l'étape de modification de l'acidité de la nanosuspension.

6. Procédé selon la revendication 5, dans lequel la nanosuspension présente un pH d'approximativement 2,4 avant l'étape de modification de l'acidité de la nanosuspension.

7. Procédé selon l'une quelconque des revendications 2 à 6, dans lequel l'étape de modification de l'acidité de la nanosuspension consiste à augmenter le pH de la nanosuspension entre approximativement 9,0 et approximativement 12,5.

8. Procédé selon la revendication 7, dans lequel l'étape de modification de l'acidité de la nanosuspension consiste à augmenter le pH de la nanosuspension à approximativement 11,5.

9. Procédé selon l'une quelconque des revendications 2 à 8, dans lequel l'étape de modification de l'acidité de la nanosuspension consiste à introduire un alcali dans la nanosuspension pour faire baisser son acidité.

10. Procédé selon la revendication 9, dans lequel l'alcali comprend une substance alcaline sèche.

11. Procédé selon la revendication 10, dans lequel la substance alcaline sèche comprend une poudre d'alcali sec.

12. Procédé selon la revendication 10 ou la revendication 11, dans lequel la substance alcaline sèche comprend l'hydroxyde de tétraméthyl ammonium.

13. Procédé selon la revendication 9, dans lequel l'alcali comprend une solution d'alcali.

14. Procédé selon la revendication 13, dans lequel la solution d'alcali comprend une solution d'hydroxyde d'ammonium.

15. Procédé selon l'une quelconque des revendications précédentes, dans lequel l'étape (i) génère une dispersion électrostérique des particules de nanopoudre dans le liquide.

16. Procédé selon l'une quelconque des revendications précédentes, dans lequel le tensioactif est un tensioactif anionique.

17. Procédé selon l'une quelconque des revendications précédentes, dans lequel le tensioactif comprend du polyacrylate d'ammonium.

18. Procédé selon l'une quelconque des revendications précédentes, dans lequel l'étape (ii) consiste à chauffer la nanosuspension pour évaporer une partie du liquide.

19. Procédé selon la revendication 18, dans lequel l'étape de chauffage consiste à chauffer la nanosuspension à une température jusqu'à approximativement 80°C.

20. Procédé selon la revendication 19, dans lequel l'étape de chauffage consiste à chauffer la nanosuspension à une température comprise entre approximativement 45°C et approximativement 60°C.

21. Procédé selon l'une quelconque des revendications 18 à 20, dans lequel la nanosuspension est maintenu à la température chauffée pour évaporer une partie du liquide.

22. Procédé selon l'une quelconque des revendications précédentes, dans lequel l'étape (ii) consiste à faire passer la nanosuspension à travers des moyens de filtration.

23. Procédé selon l'une quelconque des revendications précédentes, lequel procédé consiste en outre à soumettre la nanosuspension à une agitation par ultrasons après l'étape (ii).

24. Procédé selon l'une quelconque des revendications précédentes, dans lequel les intervalles discrets ont une durée prédéterminée.

25. Procédé selon la revendication 24, dans lequel l'étape (iii) consiste à augmenter la durée prédéterminée des intervalles discrets à mesure que la teneur liquide de la nanosuspension diminue durant l'étape (ii).

26. Procédé selon la revendication 24 ou la revendication 25, dans lequel l'étape (iii) consiste à diminuer la durée entre les intervalles discrets pour augmenter la fréquence des intervalles à mesure que la teneur liquide de la nanosuspension diminue durant l'étape (ii).

27. Procédé selon l'une quelconque des revendications précédentes, lequel procédé consiste à augmenter la fréquence de vibration et/ou la puissance des ultrasons à mesure que la teneur liquide de la nanosuspension diminue.

28. Procédé selon l'une quelconque des revendications précédentes, dans lequel les particules de nanopoudre comprennent des particules de nanopoudre de zircone.

29. Procédé selon la revendication 28, dans lequel les particules de nanopoudre comprennent des particules de nanopoudre de zircone dopée à l'oxyde d'yttrium.

30. Procédé selon l'une quelconque des revendications précédentes, dans lequel le liquide est un liquide à base d'eau.

31. Procédé selon l'une quelconque des revendications précédentes, dans lequel la nanosuspension non concentrée comprend moins de 30 % en poids de particules de nanopoudre, et présente une viscosité inférieure à 0,1 Pa·s à une vitesse de cisaillement de 100 s⁻¹.

32. Procédé selon la revendication 31, lequel procédé fournit une nanosuspension concentrée comprenant entre la teneur en pour cent en poids de particules de nanopoudre de la suspension non concentrée et approximativement 80 % en poids de particules de nanopoudre, la nanosuspension concentrée ayant une viscosité inférieure à 2 Pa·s à une vitesse de cisaillement de 100 s⁻¹.

33. Procédé selon la revendication 32, lequel procédé fournit une nanosuspension concentrée comprenant entre approximativement 50 % en poids et approximativement 80 % en poids de particules de nanopoudre.

34. Procédé selon la revendication 32 ou la revendication 33, lequel procédé fournit une nanosuspension concentrée ayant une viscosité inférieure à 1 Pa·s à une vitesse de cisaillement de 100 s⁻¹.

35. Procédé selon la revendication 34, lequel procédé fournit une nanosuspension concentrée ayant une viscosité d'approximativement 0,5 Pa·s à une vitesse de cisaillement de 100 s⁻¹.
